# EUROPÄISCHE PATENTSCHRIFT

(11) **EP 2 493 290 B1**
(45) Veröffentlichungstag und Bekanntmachung des Hinweises auf die Patenterteilung: **17.08.2016**
(21) Anmeldenummer: 10771719.1
(22) Anmeldetag: 25.10.2010
(51) Int. Cl.: A01N 25/14, A01N 43/40, A01N 47/24

(54) **HERSTELLUNG VON PESTIZID-GRANULATEN IM STRAHLSCHICHTAPPARAT**
PREPARATION OF PESTICIDE GRANULATES USING A SPOUTED BED APPARATUS
PROCÉDÉ DE PREPARATION DES GRANULES DES PESTICIDES UTILISANT UN GRANULATEUR A LIT FLUIDISÉ

(30) Priorität: 27.10.2009 EP 09174194
(43) Veröffentlichungstag der Anmeldung: 05.09.2012
(73) Patentinhaber: BASF SE, 67056 Ludwigshafen am Rhein (DE)
(72) Erfinder: BLEI, Stefan, 68199 Mannheim (DE); SCHNEIDER, Karl-Heinrich, 67271 Kleinkarlbach (DE); FRICKE, Hans-Michael, 67117 Limburgerhof (DE); WERNER, Albert, 71149 Bondorf (DE)
(74) Vertreter: BASF IP Association
(86) Internationale Anmeldenummer: PCT/EP2010/066023
(87) Internationale Veröffentlichungsnummer: WO 2011/051205

(56) Entgegenhaltungen:
- WO-A1-2005/020688
- WO-A1-2007/017159
- WO-A1-2007/104720
- DE-A1- 3 507 376
- DE-A1- 10 326 231
- DE-A1-102004 024 681
- FR-A1- 2 931 619
- US-B1- 6 299 663
- Niro Pharma Systems: "Aeromatic Fielder Strea-1", GEA Powder Technology Division , 2000, XP002617690, Gefunden im Internet: URL:http://www.geapd.kiev.ua/dox/strea1.pd f [gefunden am 2011-01-20]
- GLATT: "ProCell LabSystem", ANNOUNCEMENT GLATT, GLATT, DE, 1. April 2010 (2010-04-01), Seiten 1-6, XP007916784,

## Beschreibung

Gegenstand der vorliegenden Erfindung ist ein Verfahren zur Herstellung von Granulaten enthaltend ein Pestizid, umfassend das Aufsprühen einer Pestizid-haltigen Sprühflüssigkeit im Bereich einer kreisähnlichen Gas-Material-Strömung eines Strahlschichtapparates auf die Partikeloberfläche des Materials, und die Trocknung und Granulierung in der Gasströmung, wobei das Material Pestizid-haltige Partikel sind und die Sprühflüssigkeit einen Feststoffgehalt von mindestens 30 Gew.% und bis zu 70 Gew.% hat.

Granulate enthaltend Pestizide sind allgemein bekannt:
WO 2007/048851 offenbart feste Pflanzenschutzmittel umfassend ein flüssiges oder niedrigschmelzendes Polyalkoxylat und einen Träger auf Basis höhermolekularer Sulfonats in Form eines Wirbelschicht-Granulats.
WO 2008/065051 offenbart ein Verfahren zur Herstellung von granulatförmigen festen Lösungen von schwerlöslichen Pestiziden durch Zerstäuben einer Lösung des Pestizids und der Matrixhilfsstoffe, wobei zur Trocknung eine Wirbelschicht-Sprühgranulation verwendet werden kann.
DE 2627065 offenbart ein Verfahren zur Herstellung von festen Herbizid-Granulaten indem eine wässrige Lösung eines Herbizids in ein Wirbelschichtbett von Teilchen eines festen Verdünnungsmittels eingeführt wird.
US 5,883,047 offenbart ein Verfahren zur Herstellung von Granulaten von Pflanzenschutzmitteln, indem eine wässrige Lösung oder Dispersion einer Wirbelschicht-Granulation unterworfen wird.
DE 35 07 0376 offenbart die Granulierung von agrochemischen Verbindungen im Wirbelbettverfahren. Das zu granulierende Produkt wird in flüssiger Form in das Wirbelbett eingesprüht.

Die bekannten Verfahren zur Herstellung von Granulaten mittels Wirbelschichtverfahren weisen verschiedene **Nachteile** auf. Es entstehen wenig kompakte Granulate mit niederen Schüttgewichten. Die Granulate sind Agglomeratähnlich, was zu wenig abriebfesten und staubigen Formulierungen führt. Temperaturempfindliche Pestizide wie Pyraclostrobin werden geschädigt. Die Produktivität (kg Granulat pro Zeiteinheit) ist nicht ausreichend hoch für eine wirtschaftliche Produktion.

Aufgabe der vorliegenden Erfindung war es daher, ein Herstellverfahren für Granulate zu finden, das die oben genannten Nachteile überwinden kann.

Die Aufgabe wurde gelöst durch ein Verfahren zur Herstellung von Granulaten enthaltend ein Pestizid, umfassend das Aufsprühen einer Pestizid-haltigen Sprühflüssigkeit im Bereich einer kreisähnlichen Gas-Material-Strömung eines Strahlschichtapparates auf die Partikeloberfläche des Materials, und die Trocknung und Granulierung in der Gasströmung, wobei das Material Pestizid-haltige Partikel sind und die Sprühflüssigkeit einen Feststoffgehalt von mindestens 30 Gew.-% und bis zu 70 Gew.-% hat.

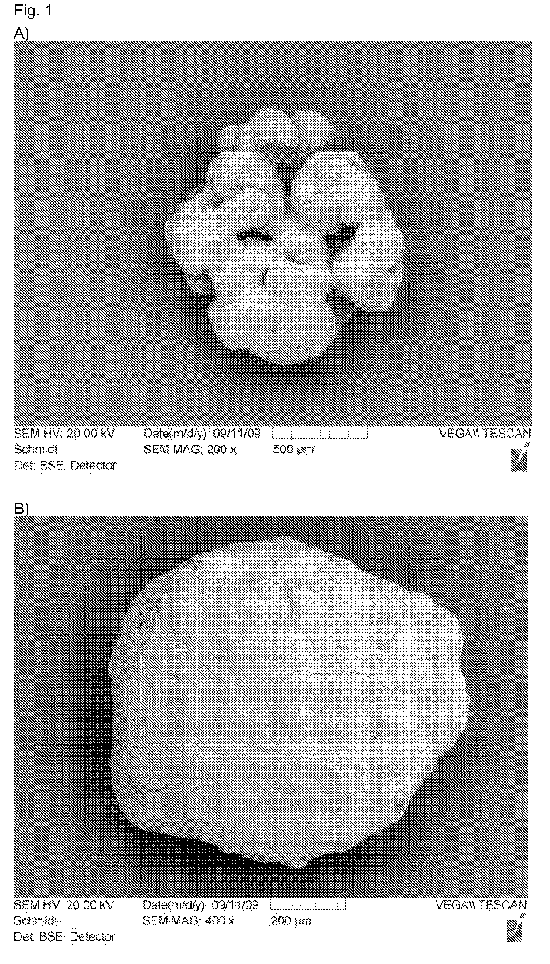

**Strahlschichtapparate** sind allgemein bekannt, beispielsweise aus DE 10 2004 024 681, WO 2004/101132, US 2005/0152815 oder EP 1 325 775. Sie sind kommerziell erhältlich, beispielweise von der Firma Glatt Ingenieurtechnik GmbH, Weimar die Modellreihe ProCell. Bevorzugt wird ein Strahlschichtapparat wie er in der Abbildung 1 von WO 2007/017159 offenbart ist und hiermit durch Verweis einbezogen wird. Die übliche Funktionsweise dieses Strahlschichtapparat ist auf Seite 7, Zeile 4 bis Seite 12, Zeile 20 beschrieben und wird hiermit durch Verweis einbezogen. WO 2004/101132 offenbart ein allgemeines Verfahren zum Aufbringen von Flüssigkeiten in eine Feststoffströmung eines Strahlschichtapparates, bei dem die Flüssigkeit durch eine Düse in die Strahlschicht eingebracht wird.

Die **kreisähnliche** Gas-Material-Strömung ist bevorzugt walzenähnlich. Meist strömt sie dabei um eine Längsachse, die vorzugsweise etwa parallel zu ein oder mehreren Spaltöffnungen des Strahlschichtapparates ist.

Zur Granulation der Pestizid-haltigen Sprühflüssigkeit wird eine erforderliche Menge an Prozessgas über mindestens (doch auch vorzugsweise nur) eine **Zuluftkammer** (meist mit etwa rechteckigem Querschnitt und begrenzenden Seitenwänden), zugeführt. Das zugeführte **Prozessgas** (wie Luft oder Stickstoff) weist Temperaturen im Bereich von - 20 °C bis 250 °C auf. In der Zuluftkammer verteilt sich das Prozessgas und tritt über ein oder mehrere (insbesondere zwei) (vorzugsweise längliche, etwa parallel zur Horizontalen verlaufenden) **Spaltöffnungen** in einen **Prozessraum** in Form von ein oder mehreren (vorzugsweise zwei) Gasstrahlen ein.

Der vorzugsweise horizontal in die Spaltöffnung eintretende **Prozessgasstrom** wird durch ein oder mehrere (vorzugsweise zwei) Umlenkteile (die verstellbar sein können und die vorzugsweise etwa derart ausgeformt sind, dass sie für eine gebogene Leitung des Prozessgases von im Zustrombereich annähernd senkrecht zur und in Richtung auf eine Längsebene des Strahlschichtapparates durch die mindestens eine spaltförmige Spaltöffnung und im Abstrombereich (Einmündebereich in den Prozessraum) etwa parallel zur Längsebene nach oben sorgen) vorzugsweise nach oben in den Prozessraum hinein umgelenkt und strömt jeweils als eine Art Freistrahl in den Apparat hinein. Durch diese Anordnung ist ein besonders gleichmäßiger Partikelstrom einstellbar, insbesondere, wenn der Rückstrom dadurch erfolgt, dass die Partikel von den Seitenwänden der Rücklaufzone abgebremst werden und seitlich in den Gasstrom eintreten.

Im weiteren kann sich der Apparatequerschnitt optional in einer Expansionszone vergrößern, so dass sich die Geschwindigkeit der Prozessgasströmung nach oben hin stetig verringert. Das Gas verlässt den Apparat als **Abgas** oberhalb der Expansionszone über ein Abluftteil, in das optional mindestens eine Entstaubungsanlage, z.B. ein oder mehrere Filterpatronen und/oder Textilfilterelemente oder dergleichen, integriert werden können.

Im **Prozessraum** befindet sich eine Menge an Pestizid-halteigen Partikeln **("Material"),** die durch den Prozessgasstrahl nach oben hin mitgerissen werden. Im oberen Bereich des Prozessraumes sowie in der darüber befindlichen Expansionszone nimmt die Gasgeschwindigkeit ab, so dass die aufwärts strömenden Teilchen seitlich aus dem Gasstrahl heraustreten und in den Prozessraum zurückfallen. Der Prozessraum wird im unteren Bereich von ein oder vorzugsweise mehreren (hier zwei) geneigten Seitenwänden begrenzt. Bedingt durch diese Seitenneigung werden die Teilchen unter Wirkung der Schwerkraft über eine Rücklaufzone in Richtung des oder der Gaseintrittsspalten befördert, wo sie anschließend wieder vom Prozessgas in den Prozessraum mitgerissen werden. Vorzugsweise kann ein Differenzdruck durch bevorzugte schlitzförmige Gaseintrittsspalten entsprechend den Prozessanforderungen eingestellt werden und so die Gleichmäßigkeit des Gaseintritts und eine Reduktion eventuell vorhandener Totzonen erreicht werden. Der Anströmquerschitt kann vorzugsweise geringer als im Stand der Technik eingestellt werden, so dass die Fluidisierungsbedingungen präziser eingestellt werden können.

Durch diesen Mechanismus bildet sich eine sehr gleichförmige Feststoffzirkulation in ein oder mehreren (vorzugsweise zwei) kreisähnlichen (vorzugsweise etwa walzenähnlichen, d.h. walzenförmigen oder annähernd walzenförmigen **Gas-Material-Strömungen** aus. Dabei besteht jede kreisähnliche Gas-Material- Strömung aus einer Aufwärtsströmung und einem Rücklauf in Richtung des Prozessgaseintrittes. Dadurch liegt auch bei sehr geringen Mengen an Teilchen im Prozessraum in der Kernzone oberhalb jedes Umlenkteiles eine hohe Partikeldichte vor. In diesem Bereich werden ein oder mehrere **Sprühdüsen** angeordnet, die gleichgerichtet zum Prozessgasstrahl nach oben sprühen und zum Einbringen der Pestizid-haltigen Sprühflüssigkeit dienen. Die Temperatur der Gas-Material-Strömung liegt meist bei höchstens 1 °C, bevorzugt höchstens 5 °C, und speziell bei höchstens 10 °C unterhalb des Schmelzpunktes des Pestizids. In einer weiteren Ausführungsform liegt die Temperatur in der Gas-Material-Strömung meist 25 bis 150°C, bevorzugt bei 30 bis 120 °C.

Durch die hohe Partikelbeladung in der Kernzone ergeben sich in der **Bedüsungszone** sehr vorteilhafte Bedingungen für den Wärme- und Stoffübergang. Weiterhin wird erreicht, dass sich die Flüssigkeit weitestgehend an den Teilchen abscheidet und diese somit gleichmäßig an den Partikeloberflächen benetzt werden. Das gleichmäßige Benetzen bei gleichzeitiger hoher Feststoffzirkulation zwischen Bedüsungsbereich und Rücklaufzone(n) bewirkt, dass ein sehr gleichmäßiger Flüssigkeitsfilm auf den Materialpartikeln gebildet wird. Durch den Erstarrungsprozess erhärtet die Flüssigkeit und der Feststoff verbleibt auf der Teilchenoberfläche. Dadurch wachsen die Granulate sehr gleichförmig und homogen, was zu einer sehr engen Korngrößenverteilung und einer homogenen Partikelstruktur führt.

Das dem Prozessraum zugeführte Prozessgas kann einen Teil der Partikel sowie **Feingut** und Stäube als feststoffbeladene Abluft aus dem Prozessraum austragen. Zur Abscheidung dieser Teilchen können mindestens ein im Abluftteil als Entstaubungsanlage optional integriertes Filtersystem oder ein oder mehrere dem Apparat nachgeschaltete andersartige Entstaubungsanlagen verwendet werden. Im Falle einer integrierten Entstaubungsanlage können beispielsweise Druckluftimpulse genutzt werden, um die zurückgehaltenen Partikeln als abgetrennten Feststoff in den Prozessraum zurückzuführen.

Im **Unterschied zu Wirbelschichtapparaten** mit integrierten Filteranlagen wird die Staubrückführung dadurch erleichtert, dass die aufwärts gerichtete Prozessgasströmung im Wesentlichen örtlich begrenzt ist und somit die zurückzuführenden Teilchen außerhalb des Gasstrahles sicher absinken können. Durch die Sogwirkung in der Nähe des Gaseintrittsspaltes wird dieser Mechanismus zusätzlich gefördert. Alternativ können von der Abluft abgeschiedene Teilchen in den Prozessraum zurückgeführt werden. Dazu können im unteren Bereich der geneigten Seitenwände ein oder mehrere Zuführungen verschiedenster Art angeordnet sein. Bedingt durch die hohe Geschwindigkeit des Prozessgasstrahls in der Nähe des oder der Gaseintrittsspalten werden die feinen Partikeln angesaugt und der Bedüsungszone zugeführt, wo sie mit Flüssigkeit benetzt werden und am Wachstumsprozess teilnehmen.

Ein oder mehrere (vorzugsweise zwei) optional (vorzugsweise etwa parallel zu der oder den Spaltöffnungen) eingebaute Leitbleche können in einer bevorzugten Ausführungsform den Gasstrahl stützen, verstärken den Sogeffekt und verbessern die Zuführung der Feststoffe in die Bedüsungszone hinein. Eventuell auftretende Agglomerationseffekte werden minimiert, da in der Bedüsungszone sehr hohe Strömungsgeschwindigkeiten und somit höhere Trennkräfte als in Wirbelschichten auftreten. Dadurch werden Teilchen separiert und wachsen zu sehr kugeligen Granulaten. Das Strömungsprofil des Prozessgases im Prozessraum bewirkt weiterhin, dass von der optional integrierten Filteranlage in den Prozessraum zurückgeführte Feinpartikel nicht in die Bedüsungszone zurückfallen. Dadurch werden das Verkleben von Feinpartikeln und daraus folgende Agglomeratbildungsprozesse unterbunden.

Zur kontinuierlichen Prozessführung kann der Apparat optional mit ein oder mehreren unterschiedlichen **Eintragsystemen für Feststoffe** ausgerüstet werden. Dadurch können beispielsweise Partikel dem Prozess zugeführt werden, die durch Zerkleinerung von beispielsweise zu großen Granulaten gewonnen werden können oder/und aus zu kleinen Granulaten bestehen. Diese Teilchen dienen dann als Granulationskeime oder als Startfüllung zur Verkürzung der Inbetriebnahmezeit. Außerdem können hier ein oder mehrere Additive in fester Form in den Prozess eingeschleust werden, die in die Granulate eingebettet werden sollen.

Weiterhin kann der Apparat mit ein oder mehreren **Austragsorganen** versehen werden, um Partikel aus dem Prozessraum entnehmen zu können. Dies kann beispielsweise durch mindestens einen Überlauf und/oder durch mindestens ein volumetrisches Austragsorgan, z.B. eine Zellenradschleuse, einen Mahl-Sieb Kreislauf, oder einen Schwerkraftsichter, z.B. einen mit Sichtgas beaufschlagten Zick-Zack-Sichter oder einen Steigrohrsichter, erfolgen. Bevorzugt ist das Austragsorgan ein Mahl-Sieb Kreislauf. Dabei kann das Siebgut über zwei Siebe aufgetrennt werden nach Feingut, Nutzgut und Grobgut. Das Grobgut kann nach Mahlung in einer Mühle wieder der Siebung oder direkt dem Prozessraum des Strahlschichtapparates zugeführt werden.

Optional können ein oder mehrere **Zerldeinerungseinrichtungen** im Prozessraum, jedoch vorzugsweise im Bereich der Rücklaufzone an der oder den geneigten Seitenwänden angebracht werden, um durch Zerkleinerung ausreichend Feinmaterial als Keime für den Granulatbildungsprozess zu erzeugen. Weiterhin können die ein oder mehreren Rücklaufzonen optional zur Positionierung von jeweils ein oder mehreren Beheizungen und/oder anderen Wärmeübertragungseinrichtungen genutzt werden. Beispielsweise kann die Apparatewand doppelwandig ausgeführt sein, um diese beispielsweise unter Nutzung von flüssigen oder gasförmigen Wärmeträgern zur Beheizung oder **Kühlung der Wände** zu verwenden. Somit lassen sich optimale Oberflächentemperaturen einstellen, um beispielsweise Produktablagerungen zu vermeiden.

Im Prozessraum oder in den darüberliegenden Apparateteilen, der Expansionszone und dem Abluftteil, können optional ein oder mehrere **Sprühdüsen** angeordnet werden, die vorzugsweise nach oben sprühen, aber auch teilweise nach oben sprühen können. Hier kann - neben oder statt der Bedüsung durch die Düse(n) - die Sprühflüssigkeit eingedüst werden, um beispielsweise durch Sprühtrocknung/Sprüherstarrung im Apparat Granulationskeime zu erzeugen, insbesondere in der Anfangsphase. Alternativ können über einen Teil der Sprüheinrichtungen Additive in Form von organischen oder anorganischen Coatingmitteln (insbesondere Trennmitteln) oder anderen Komponenten in flüssiger Form eingesprüht und somit in die Granulatstruktur (mindestens weitgehend) homogen eingebettet werden. Wenn die Sprühdüse(n) die temperaturbeaufschlagte Zuluftkammer(n) passieren, können optional die flüssigkeitsführenden Teile mit Isolationen oder ein oder mehreren unterschiedlichen Kühl- oder Heizsystemen versehen werden, um Schädigungen an der flüssigen Formulierung zu unterbinden. Als Sprühdüsen werden bevorzugt Zweistoff-Düsen eingesetzt, bei denen Gas und Sprühflüssigkeit gleichzeitig eingedüst werden. Der kann bei mindestens 1,1 bar, bevorzugt mindestens 2,0 bar, besonders bevorzugt bei mindestens 2,5 bar und insbesondere bei mindestens 3,0 bar liegen. Zweistoffdüsen sind vorteilhaft, weil sie einen höheren Feststoffgehalt und höhere Viskosität der Sprühflüssigkeit erlauben und damit zu einem höheren Durchsatz führen können. Insbesondere bei Dispergiermittel-haltigen Sprühflüssigkeiten war die ein Vorteil, da Dispergiermittel die Viskosität erhöhen.

Die Pestizid-haltige **Sprühflüssigkeit** enthält mindestens ein Pestizid in gelöster, suspendierter, emulgierter, und/oder geschmolzener Form. Bevorzugt liegt das Pestizid in gelöster, suspendierter oder emulgierter Form in der Sprühflüssigkeit vor, insbesondere in suspendierter oder gelöster Form. Die Sprühflüssigkeit kann ein Lösungsmittel enthalten, wie Wasser. Die Viskosität der Sprühflüssigkeit kann bei 20 °C bis zu 5000 mPas, bevorzugt bis zu 2500 mPas betragen.

Die Pestizid-haltige Sprühflüssigkeit hat einen **Feststoffgehalt** von mindestens 30 Gew.% und insbesondere mindestens 40 Gew.%. Die Obergrenze des Feststoffgehalts richtet sich nach der Viskosität der Sprühflüssigkeit, die noch pumpbar sein sollte. So hat die Sprühflüssigkeit einen Feststoffgehalt von bis zu 70 Gew.%, bevorzugt bis zu 65 Gew.% und insbesondere bis zu 60 Gew.%. Die Sprühflüssigkeit enthält meist mindestens 1 Gew.%, bevorzugt mindestens 5 Gew.% und insbesondere mindestens 10 Gew.% Pestizid. Die Sprühflüssigkeit enthält meist mindestens 5 Gew.%, bevorzugt mindestens 12 Gew.% und insbesondere mindestens 18 Gew.% Dispergiermittel.

Die Pestizid-haltige Sprühflüssigkeit enthält bevorzugt mindestens ein **Dispergiermittel.** Das Dispergiermittel ist bevorzugt ein anionisches Tensid. Geeignete Dispergiermittel sind beispielsweise anionische Tenside aus der Gruppe der Alkali-, Erdalkali- oder Ammoniumsalze von Sulfonaten, Sulfaten, Phosphaten oder Carboxylaten. Beispiele für Sulfonate sind Alkylarylsulfonate, Diphenylsulfonate, alpha-Olefinsulfonate, Ligninsulfonate, Sulfonate von Fettsäuren und Ölen, Sulfonate von ethoxylierten Alkylphenolen, Sulfonate von kondensierten Naphthalinen, Sulfonate von Dodecyl und Tridecylbenzolen, Sulfonate von Naphthalinen und Alkylnaphthalinen, Sulfosuccinate oder Sulfosuccinamate. Beispiele für Sulfate sind Sulfate von Fettsäure und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate. Besonders bevorzugt sind Alkali-, Erdalkali- oder Ammoniumsalze von Sulfonaten, besonders bevorzugt Ligninsulfonate (wie Natriumligninsulfonate) und Sulfonate von kondensierten Naphthalinen (wie Natriumsalz von Naphthalinsulfonat-Formaldehyd-Polykondensat). Bevorzugt enthält das Granulat mindestens zwei Dispergiermittel.

Das Granulat enthält üblicherweise 5 bis 70 Gew.% Dispergiermittel, bevorzugt 10 bis 50 Gew.% und insbesondere 20 bis 45 Gew.%. Die Konzentration in der Sprühlösung kann so eingestellt werden, dass im Granulat die gewünschte Konzentration erreicht wird.

Der Begriff **Pestizid** bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide, Herbizide, und Wachstumsregulatoren. Auch Mischungen von Pestiziden aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können.

Geeignete Fungizide sind:
A) Strobilurine:
   Azoxystrobin, Dimoxystrobin, Enestroburin, Fluoxastrobin, Kresoxim-methyl, Metominostrobin, Orysastrobin, Picoxystrobin, Pyraclostrobin, Pyrametostrobin, Pyraoxystrobin, Pyribencarb, Trifloxystrobin, 2-(ortho-((2,5-Dimethylphenyl-oxymethylen)-phenyl)-3-methoxy-acrylsäuremethylester, 2-(2-(3-(2,6-dichlorphenyl)-1-methyl-allylideneaminooxymethyl)-phenyl)-2-methoxyimino-N-methyl-acetamide;
B) Carbonsäureamide:
   - Carbonsäureanilide: Benalaxyl, Benalaxyl-M, Benodanil, Bixafen, Boscalid, Carboxin, Fenfuram, Fenhexamid, Flutolanil, Furametpyr, Isopyrazam, Isotianil, Kiralaxyl, Mepronil, Metalaxyl, Metalaxyl-M (Mefenoxam), Ofurace, Oxadixyl, Oxycarboxin, Penflufen (N-(2-(1,3-Dimethyl-butyl)-phenyl)-1,3-dimethyl-5-fluor-1H-pyrazol-4-car-boxamid), Penthiopyrad, Sedaxane, Tecloftalam, Thifluzamide, Tiadinil, 2-Amino-4-methyl-thiazol-5-carboxanilid, N-(3',4',5'-Trifluorbiphenyl-2-yl)-3-difluormethyl-1-methyl-1 H-pyrazol-4-carboxamid, N-(4'-Trifluormethylthiobiphenyl-2-yl)-3-difluor-methyl-1-methyl-1H-pyrazol-4-carboxamid, N-(2-(1,3,3-Trimethyl-butyl)-phenyl)-1,3-dimethyl-5-fluor-1 H-pyrazol-4-carboxamid;
   - Carbonsäuremorpholide: Dimethomorph, Flumorph, Pyrimorph;
   - Benzoesäureamide: Flumetover, Fluopicolide, Fluopyram, Zoxamid;
   - Sonstige Carbonsäureamide: Carpropamid, Diclocymet, Mandipropamid, Oxytetracyclin, Silthiofam, N-(6-methoxy-pyridin-3-yl)cyclopropancarbonsäureamid;
C) Azole:
   - Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol;
   - Imidazole: Cyazofamid, Imazalil, Imazalilsulfat, Pefurazoat, Prochloraz, Triflumizol;
   - Benzimidazole: Benomyl, Carbendazim, Fuberidazole, Thiabendazol;
   - Sonstige: Ethaboxam, Etridiazol, Hymexazol, 2-(4-Chlor-phenyl)-N-[4-(3,4-dimethoxy-phenyl)-isoxazol-5-yl]-2-prop-2-inyloxy-acetamid;
D) Stickstoffhaltige Heterocyclylverbindungen
   - Pyridine: Fluazinam, Pyrifenox, 3-[5-(4-Chlor-phenyl)-2,3-dimethyl-isoxazolidin-3-yl]-pyridin, 3-[5-(4-Methyl-phenyl)-2,3-dimethyl-isoxazolidin-3-yl]-pyridin;
   - Pyrimidine: Bupirimat, Cyprodinil, Diflumetorim, Fenarimol, Ferimzone, Mepanipyrim, Nitrapyrin, Nuarimol, Pyrimethanil;
   - Piperazine: Triforine;
   - Pyrrole: Fludioxonil, Fenpiclonil;
   - Morpholine: Aldimorph, Dodemorph, Dodemorphacetat, Fenpropimorph, Tridemorph;
   - Piperidine: Fenpropidin;
   - Dicarboximide: Fluorimid, Iprodione, Procymidone, Vinclozolin;
   - nichtaromatische 5-Ring-Heterocyclen: Famoxadon, Fenamidon, Flutianil, Octhilinon, Probenazol, 5-Amino-2-isopropyl-3-oxo-4-ortho-tolyl-2,3-dihydropyrazol-1-thiocarbonsäureS-allylester;
   - sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquatmethylsulfat, Fenoxanil, Folpet, Oxolinsäure, Piperalin, Proquinazid, Pyroquilon, Quinoxyfen, Triazoxid, Tricyclazol, 2-Butoxy-6-jod-3-propyl-chromen-4-on, 5-Chlor-1-(4,6-dimethoxy-pyrimidin-2-yl)-2-methyl-1H-benzoimidazol, 5-Chlor-7-(4-methyl-piperidin-1-yl)-6-(2,4,6-trifluor-phenyl)-[1,2,4]triazolo[1,5-a]pyrimidin, 5-Ethyl-6-octyl-[1,2,4]triazolo[1,5-a]pyrimidin-7-ylamin;
E) Carbamate und Dithiocarbamate
   - Thio- und Dithiocarbamate: Ferbam, Mancozeb, Maneb, Metam, Methasulphocarb, Metiram, Propineb, Thiram, Zineb, Ziram;
   - Carbamate: Diethofencarb, Benthiavalicarb, Iprovalicarb, Propamocarb, Propamo-carb-hydrochlorid, Valiphenal, N-(1-(1-(4-Cyanophenyl)ethansulfonyl)-but-2-yl)carb-aminsäure-(4-fluorphenyl)ester;
F) Sonstige Fungizide
   - Guanidine: Dodine, Dodine freie Base, Guazatin, Guazatinacetat, Iminoctadin, Iminoctadin-triacetat, Iminoctadin-tris(albesilat);
   - Antibiotika: Kasugamycin, Kasugamycinhydrochlorid-Hydrat, Polyoxine, Streptomycin, Validamycin A;
   - Nitrophenylderivate: Binapacryl, Dicloran, Dinobuton, Dinocap, Nitrothal-isopropyl, Tecnazen;
   - Organometallverbindungen: Fentin-Salze wie beispielsweise Fentin-acetat, Fentinchlorid, Fentin-hydroxid;
   - Schwefelhaltige Heterocyclylverbindungen: Dithianon, Isoprothiolane;
   - Organophosphorverbindungen: Edifenphos, Fosetyl, Fosetyl-Aluminium, Iprobenfos, Phosphorige Säure und ihre Salze wie beispielsweise Calciumhydrogenphosphonate, Pyrazophos, Tolclofos-methyl;
   - Organochlorverbindungen: Chlorthalonil, Dichlofluanid, Dichlorphen, Flusulfamide, Hexachlorbenzol, Pencycuron, Pentachlorphenol und dessen Salze, Phthalid, Quintozen, Thiophanat-Methyl, Tolylfluanid, N-(4-Chlor-2-nitro-phenyl)-N-ethyl-4-methyl-benzolsulfonamid;
   - Anorganische Wirkstoffe: Phosphorige Säure und ihre Salze, Bordeaux Brühe, Kupfersalze wie beispielsweise Kupferacetat, Kupferhydroxid, Kupferoxychlorid, basisches Kupfersulfat, Schwefel;
   - Sonstige: Biphenyl, Bronopol, Cyflufenamid, Cymoxanil, Diphenylamin, Metrafenon, Mildiomycin, Oxin-Kupfer, Prohexadion-Calcium, Spiroxamin, Tolylfluanid, N-(Cyclo-propylmethoxyimino-(6-difluormethoxy-2,3-difluor-phenyl)-methyl)-2-phenylacetamid, N'-(4-(4-Chlor-3-trifluormethyl-phenoxy)-2,5-dimethyl-phenyl)-N-ethyl-N-methylforma-midin, N'-(4-(4-Fluor-3-trifluormethyl-phenoxy)-2,5-dimethyl-phenyl)-N-ethyl-N-meth-ylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanyl-propoxy)-phenyl)-N-ethyl-N-methylformamidin, 2-{1-[2-(5-Methyl-3-trifluormethyl-pyrazol-1-yl)-acetyl]-piperidin-4-yl}-thiazol-4-carboxylsäure-methyl-(1,2,3,4-tetra-hydronaphthalen-1-yl)-amid, 2-{1-[2-(5-Methyl-3-trifluormethyl-pyrazol-1-yl)-acetyl]-piperidin-4-yl}-thiazol-4-carboxylsäure-methyl-(R)-1,2,3,4-tetrahydronaphthalen-1-yl-amid, Essigsäure-6-tert.-butyl-8-fluor-2,3-dimethyl-quinolin-4-yl-ester, Methoxy-essig-säure-6-tert.-butyl-8-fluor-2,3-dimethyl-quinolin-4-yl-ester, *N*-Methyl-2-{1-[2-(5-methyl-3-trifluormethyl-1H-pyrazol-1-yl)-acetyl]-piperidin-4-yl}-*N-*[(1R)-1,2,3,4-tetrahydro-naphthalen-1-yl]-4-thiazolcarboxamid.

Geeignete Wachstumsregler sind:
Abscisinsäure, Amidochlor, Ancymidol , 6-Benzylaminopurin, Brassinolid, Butralin, Chlormequat (Chlormequatchlorid), Cholinchlorid, Cyclanilid, Daminozid, Dikegulac, Dimethipin, 2,6-Dimethylpuridin, Ethephon, Flumetralin, Flurprimidol , Fluthiacet, Forchlorfenuron, Gibberellinsäure, Inabenfid, Indol-3-essigsäure, Maleinsäurehydrazid, Mefluidid, Mepiquat (Mepiquatchlorid), Metconazol, Naphthalenessigsäure, N-6-Benzyladenin, Paclobutrazol, Prohexadion (Prohexadion-Calcium), Prohydrojasmon, Thidiazuron, Triapenthenol, Tributylphosphorotrithioat, 2,3,5-tri-Jodbenzoesäure, Tri-nexapac-ethyl und Uniconazol.

Geeignete Herbizide sind:
- Acetamide: Acetochlor, Alachlor, Butachlor, Dimethachlor, Dimethenamid, Flufenacet, Mefenacet, Metolachlor, Metazachlor, Napropamid, Naproanilid, Pethoxamid, Pretilachlor, Propachlor, Thenylchlor;
- Aminosäureanaloga: Bilanafos, Glyphosat, Glufosinat, Sulfosat;
- Aryloxyphenoxypropionate: Clodinafop, Cyhalofop-butyl, Fenoxaprop, Fluazifop, Haloxyfop, Metamifop, Propaquizafop, Quizalofop, Quizalofop-P-tefuryl;
- Bipyridyle: Diquat, Paraquat;
- Carbamate und Thiocarbamate: Asulam, Butylate, Carbetamide, Desmedipham, Dimepiperat, Eptam (EPTC), Esprocarb, Molinate, Orbencarb, Phenmedipham, Prosulfocarb, Pyributicarb, Thiobencarb, Triallate;
- Cyclohexanedione: Butroxydim, Clethodim, Cycloxydim, Profoxydim, Sethoxydim, Tepraloxydim, Tralkoxydim;
- Dinitroaniline: Benfluralin, Ethalfluralin, Oryzalin, Pendimethalin, Prodiamine, Trifluralin;
- Diphenylether: Acifluorfen, Aclonifen, Bifenox, Diclofop, Ethoxyfen, Fomesafen, Lactofen, Oxyfluorfen;
- Hydroxybenzonitrile: Bromoxynil, Dichlobenil, loxynil;
- Imidazolinone: Imazamethabenz, Imazamox, Imazapic, Imazapyr, Imazaquin, Imazethapyr;
- Phenoxyessigsäuren: Clomeprop, 2,4-Dichlorphenoxyessigsäure (2,4-D), 2,4-DB, Dichlorprop, MCPA, MCPA-thioethyl, MCPB, Mecoprop;
- Pyrazine: Chloridazon, Flufenpyr-ethyl, Fluthiacet, Norflurazon, Pyridat;
- Pyridine: Aminopyralid, Clopyralid, Diflufenican, Dithiopyr, Fluridone, Fluroxypyr, Picloram, Picolinafen, Thiazopyr;
- Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, lodosulfuron, Mesosulfuron, Metsulfuron-methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chlor-6-propyl-imidazo[1,2-b]pyridazin-3-yl)sulfonyl)-3-(4,6-dimethoxy-pyrimidin-2-yl)harnstoff;
- Triazine: Ametryn, Atrazin, Cyanazin, Dimethametryn, Ethiozin, Hexazinon, Metamitron, Metribuzin, Prometryn, Simazin, Terbuthylazin, Terbutryn, Triaziflam;
- Harnstoffe: Chlorotoluron, Daimuron, Diuron, Fluometuron, Isoproturon, Linuron, Methabenzthiazuron,Tebuthiuron;
- andere Hemmstoffe der Acetolactatsynthase: Bispyribac-Natrium, Cloransulam-Methyl, Diclosulam, Florasulam, Flucarbazone, Flumetsulam, Metosulam, Orthosulfamuron, Penoxsulam, Propoxycarbazone, Pyribambenz-Propyl, Pyribenzoxim, Pyriftalid, Pyriminobac-methyl, Pyrimisulfan, Pyrithiobac, Pyroxasulfon, Pyroxsulam;
- Sonstige: Amicarbazon, Aminotriazol, Anilofos, Beflubutamid, Benazolin, Bencarbazon, Benfluresat, Benzofenap, Bentazon, Benzobicyclon, Bromacil, Bromobutid, Butafenacil, Butamifos, Cafenstrole, Carfentrazone, Cinidon-Ethlyl, Chlorthal, Cinmethylin, Clomazone, Cumyluron, Cyprosulfamid, Dicamba, Difenzoquat, Diflufenzopyr, *Drechslera monoceras,* Endothal, Ethofumesat, Etobenzanid, Fentrazamide, Flumiclorac-Pentyl, Flumioxazin, Flupoxam, Fluorochloridon, Flurtamon, Indanofan, Isoxaben, Isoxaflutol, Lenacil, Propanil, Propyzamid, Quinclorac, Quinmerac, Mesotrion, Methylarsensäure, Naptalam, Oxadiargyl, Oxadiazon, Oxaziclomefon, Pentoxazon, Pinoxaden, Pyraclonil, Pyraflufen-Ethyl, Pyrasulfotol, Pyrazoxyfen, Pyrazolynat, Quinoclamin, Saflufenacil, Sulcotrion, Sulfentrazon, Terbacil, Tefuryltrion, Tembotrion, Thiencarbazon, Topramezon, 4-Hydroxy-3-[2-(2-methoxy-ethoxymethyl)-6-trifluormethyl-pyridin-3-carbonyl]-bicyclo[3.2.1]oct-3-en-2-on, (3-[2-Chlor-4-fluor-5-(3-methyl-2,6-dioxo-4-trifluormethyl-3,6-dihydro-2H-pyrimidin-1-yl)-phenoxy]-pyridin-2-yloxy)-essigsäureethylester, 6-Amino-5-chlor-2-cyclopropyl-pyrimidin-4-carboxylsäuremethylester, 6-Chlor-3-(2-cyclopropyl-6-methyl-phenoxy)-pyridazin-4-ol, 4-Amino-3-chlor-6-(4-chlor-phenyl)-5-fluor-pyridin-2-carboxylsäure, 4-Amino-3-chlor-6-(4-chlor-2-fluor-3-methoxy-phenyl)-pyridin-2-carboxylsäuremethyl-ester und 4-Amino-3-chlor-6-(4-chloro-3-dimethylamino-2-fluor-phenyl)-pyridin-2-carboxylsäuremethylester.

Geeignete Insektizide sind:
- Organo(thio)phosphate: Acephat, Azamethiphos, Azinphos-methyl, Chlorpyrifos, Chlorpyrifos-Methyl, Chlorfenvinphos, Diazinon, Dichlorvos, Dicrotophos, Dimethoat, Disulfoton, Ethion, Fenitrothion, Fenthion, Isoxathion, Malathion, Methamidophos, Methidathion, Methyl-Parathion, Mevinphos, Monocrotophos, Oxydemeton-Methyl, Paraoxon, Parathion, Phenthoate, Phosalone, Phosmet, Phosphamidon, Phorate, Phoxim, Pirimiphos-Methyl, Profenofos, Prothiofos, Sulprophos, Tetrachlorvinphos, Terbufos, Triazophos, Trichlorfon;
- Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
- Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerat, Etofenprox, Fenpropathrin, Fenvalerate, Imiprothrin, Lambda-Cyhalothrin, Permethrin, Prallethrin, Pyrethrin I und II, Resmethrin, Silafluofen, tau-Fluvalinat, Tefluthrin, Tetramethrin, Tralomethrin, Transfluthrin, Profluthrin, Dimefluthrin,
- Hemmstoffe des Insektenwachstums: a) Chitinsynthese-Hemmstoffe: Benzoylharnstoffe: Chlorfluazuron, Cyramazin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin; b) Ecdyson-Antagonisten: Halofenozid, Methoxyfenozid, Tebufenozid, Azadirachtin; c) Juvenoide: Pyriproxyfen, Methoprene, Fenoxycarb; d) Lipidbiosynthese-Hemmstoffe: Spirodiclofen, Spiromesifen, Spirotetramat;
- Nikotinreceptor-Agonisten/Antagonisten: Clothianidin, Dinotefuran, Imidacloprid, Thiamethoxam, Nitenpyram, Acetamiprid, Thiacloprid, 1-(2-chloro-thiazol-5-yl-methyl)-2-nitrimino-3,5-dimethyl-[1,3,5]triazinan;
- GABA-Antagonisten: Endosulfan, Ethiprol, Fipronil, Vaniliprol, Pyrafluprol, Pyriprol, 5-Amino-1-(2,6-dichlor-4-methyl-phenyl)-4-sulfinamoyl-1H-pyrazol-3-thiocarbonsäureamid;
- Macrocyclische Lactone: Abamectin, Emamectin, Milbemectin, Lepimectin, Spinosad, Spinetoram;
- Mitochondriale Elektronentransportketten-Inhibitor (METI) I Akarizide: Fenazaquin, Pyridaben, Tebufenpyrad, Tolfenpyrad, Flufenerim;
- METI II und III Substanzen: Acequinocyl, Fluacyprim, Hydramethylnon;
- Entkoppler: Chlorfenapyr;
- Hemmstoffe der oxidativen Phosphorylierung: Cyhexatin, Diafenthiuron, Fenbutatinoxid, Propargit;
- Hemmstoffe der Häutung der Insekten: Cryomazin;
- Hemmstoffe von ,mixed function oxidases': Piperonylbutoxid;
- Natriumkanalblocker: Indoxacarb, Metaflumizon;
- Sonstige: Benclothiaz, Bifenazate, Cartap, Flonicamid, Pyridalyl, Pymetrozin, Schwefel, Thiocyclam, Flubendiamid, Chlorantraniliprol, Cyazypyr (HGW86); Cyenopyrafen, Flupyrazofos, Cyflumetofen, Amidoflumet, Imicyafos, Bistrifluron und Pyrifluquinazon.

**Bevorzugte Pestizide** sind Alpha-Cypermethrin, Ametoctradin, Bentazon, Benthiavalicarb-isopropyl, Boscalid, Calciumhydrogenphosphonate, Carbendazim, Chloridazon, Chlorothalonil, Cinidon-ethyl, Cyclosulfamuron, Cymoxanil, Dicamba, Diflufenzopyr, Dimethomorph, Dimoxystrobin, Dithianon, Diuron, Fipronil, Fluquinconazole, Folpet, Fosetyl-AI, Imazamox, Imazapic, Imazapyr, Imazethapyr, Iprodione, Isoproturon, Isoxadifen-ethyl, Kresoxim-methyl, Mancozeb, Mecoprop-P, Mepiquat-Chlorid, Metiram, Myclobutanil, Nicosulfuron, Picolinafen, Profoxydim, Prohexadione-Calcium, Propoxycarbazon-Natrium, Pyraclostrobin, Quinclorac, Saflufenacil, Sulfosulfuron, Sulphur, Tebufenpyrad, Thiram, Tritosulfuron und Vinclozoliz. Besonders bevorzugte Pestizide sind Boscalid und Pyraclostrobin, insbesondere Boscalid.

Das Granulat kann 1 bis 99 Gew.% Pestizid enthalten, bevorzugt 20 bis 80 Gew.%, besonders bevorzugt 30 bis 70 Gew.%, und insbesondere 40 bis 70 Gew.%. Die Konzentration in der Sprühlösung kann so eingestellt werden, dass im Granulat die gewünschte Konzentration erreicht wird.

Üblicherweise ergibt die vorliegende Erfindung ein **Granulat** enthaltend ein Pestizid, wobei das Granulat eine **Rundheit** von mindestens 0,85, bevorzugt mindestens 0,88, besonders bevorzugt mindestens 0,90, und insbesondere mindestens 0,94 hat.

Die Rundheit beschreibt das Verhältnis zwischen dem Flächeninhalt (A) eines Partikelbildes und dem Umfang (U). Die Rundheit (R) berechnet sich aus R = 4πA / U². Demnach hätte ein kugelförmiges Partikel eine Rundheit nahe Eins während ein gezacktes, unregelmäßiges Partikelbild eine Rundheit nahe Null hätte. Die Rundheit kann bestimmt werden mit Hilfe von automatisierten Bildanalysetechniken, beispielsweise mit dem optischen Partikelmesssystem CAMSIZER® von Retsch Technology, das die simultane Bestimmung von Partikelgröße und Partikelform (wie Rundheit) mittels digitaler Bildanalyse ermöglicht.

Die **Teilchengrößenverteilung** D50 liegt im Bereich von 50 bis 5000 µm, bevorzugt 100 bis 1000 µm. Sie kann bestimmt werden mittels digitaler Bildverarbeitung, beispielsweise mit einem Camsizer® der Firma Retsch Technology.

Die vorliegende Erfindung bietet viele **Vorteile** gegenüber dem Stand der Technik: Bei den Versuchen hatte das Strahlschichtverfahren eine deutlich höhere Prozessstabilität als ein vergleichbares Wirbelschichtverfahren, d.h. es konnten verschiedene Parameter verändert oder optimiert werden ohne dass der Granulierungprozess zusammenbrach. Es entstehen sehr kompakte Granulate mit hohen Schüttgewichten. Die Granulate sind kugelförmig im Gegensatz zu den eher Agglomeratähnlichen Granulaten aus Wirbelschichtverfahren. Die Kugelform resultiert in Granulaten, die deutlich abriebfester und weitgehend staubfrei sind. Außerdem zeigen sie eine bessere Rieselfähigkeit und besitzen eine konstantere Schüttdichte, wodurch die Dosierbarkeit wesentlich erleichtert wird. Selbst temperaturempfindliche Pestizide wie Pyraclostrobin konnten ohne thermische Schädigung granuliert werden. Die Produktivität (kg Granulat pro Zeiteinheit) ist deutlich höher als beim Wirbelbettverfahren. Dies war möglich durch einen erhöhten Feststoffgehalt und Strom der Sprühflüssigkeit, eine erhöhte Zulufttemperatur und/oder einen erhöhten Zuluftvolumenstrom.

Nachfolgende Beispiele erläutern die Erfindung.

### Beispiele

### Apparatur und Verfahren

Alle Versuche wurden auf der Laboranlage ProCell 5 der Glatt Ingenieurtechnik GmbH (Weimar) durchgeführt. Es standen der Strahlschichteinsatz "ProCell" und der Standardwirbelschichteinsatz "GF" zur Verfügung. Der GF-Einsatz ist ein leicht konischer Wirbelschichteinsatz mit drei möglichen Düsenpositionen. Dabei ist sprühen von oben, unten und durch den Boden möglich. Zusätzlich kann ein Wursterrohr und ein Boden mit entsprechender Perforation eingebaut werden. Beim ProCell-Strahlwirbelschichteinsatz befinden sich die zwei parallelen Luftspalte an der Unterseite eines rechtwinkligen Trichters. Mittig zwischen diesen Luftspalten ist die Düse angeordnet, mit der von unten gesprüht wird. Die Option Topspray ist vorhanden.

Der kontinuierliche und klassierende Austrag wird mit einem Zickzack-Sichter realisiert. Bei beiden Einsätzen werden Düsen der Reihen 970 S4 der Düsen-Schlick GmbH (Untersiemau/Coburg) verwendet und von unten nach oben gesprüht. Umgebungsluft wurde als Prozessgas verwendet und periphere Druckluft als Sicht- und Düsengas. Lösungsmittel war VE-Wasser.

Vor jedem Versuch wurde die Anlage auf die gewünschte Temperatur des Wirbelbetts vorgeheizt und alle notwendigen Anlagenteile in Betrieb genommen. Nach dem Einfüllen der Granulatvorlage wurden Zulufttemperatur und Zuluftvolumenstrom bis zu den gewünschten Werten erhöht. Die Steigerungsraten wurden dabei auf maximal 1 K/min bzw. 1 m³/h/min begrenzt, damit die Schicht den neuen Prozessparametern folgen kann. Die Betttemperatur wurde dabei durch die Erhöhung des Suspensionsmassenstroms konstant gehalten. Durch ständiges Rühren wurde ein Absetzen der Sprühflüssigkeit in Form der Suspension verhindert.

### Analytik:

Die Partikelgrößenverteilung wurde mit einem CAMSIZER® der Retsch Technology GmbH bestimmt.

Die lose Schüttdichte wurde bestimmt durch Wägung von 100 ml locker eingefülltem Granulat in einem Messzylinder. Die Gestampfte Schüttdichte wurde bestimmt indem ein Messzylinder 20mal aus einer definierten Höhe fallen gelassen wird.

Die Dispergierfähigkeit nach CIPAC Methode MT-174 wurde wie folgt bestimmt: Unter ständigem Rühren (300 U/min) werden 9 g Granulat in 900 ml hartem Wasser (19.2° deutscher Härte) im Becherglas dispergiert. Nach 1 min rühren wird der Rührer abgeschaltet. Nach einer weiteren Minute wird von oben bis auf 90 ml abgesaugt. Der Rückstand wird bei 70 °C bis zur Gewichtskonstanz getrocknet. Die Dispergierfähigkeit (%) errechnet sich aus 111,1 * (Einwaage-Rückstand)/Einwage. In der abgesaugten Flüssigkeit befindet sich die Feststoffmenge = Einwaage - Rückstand. Da nur 90 % der Flüssigkeit abgezogen werden, muss der abgezogene Feststoff auf die 100 % Flüssigkeit erweitert werden: (10/9*90 % = 100 %); dadurch ergibt sich der Faktor 1,111.

### Beispiel 1

Die Sprühflüssigkeit mit 55 Gew.% Feststoffgehalt wurde hergestellt aus 27,5 Gew.% Boscalid, 5,5 Gew.% Ammoniumsulfat, 0,4 Gew.% Silikonhaltiger Entschäumer, und 22 Gew.% Dispergiermittel (Mischung von zwei Sulfonaten) in VE-Wasser durch Rühren eine Suspension hergestellt wurde (Viskosität 215 mPas bei 20 °C). Sprühflüssigkeiten mit einem geringeren Feststoffgehalt wurden entsprechend verdünnt. Boscalid ist ein Fungizid mit Schmelzpunkt von 143 °C und einer Wasserlöslichkeit von 6 mg/l. Die Prozessbedingungen sind in Tabelle 1 und die Produktanalytik in Tabelle 2 aufgelistet.

### Vergleichsversuche:

Zum Vergleich wurde die Sprühflüssigkeit in der Wirbelschicht granuliert ("V", Tabelle 1). Ausgehend von V0 wurden einzelne Parameter des Vergleichsversuchs verändert. Die Erhöhung der Zulufttemeratur von 150 auf 170 °C führte zum Zusammenbruch des Wirbelbetts durch verklebte Partikel. Ebenso brach das Wirbelbett zusammen, als die Betttemperatur von 75 auf 60 °C gesenkt wurde. Als die der Volumenstrom der Zuluft von 120 auf 160 m³/h erhöht wurde, musste der Versuch auch abgebrochen werden, da die Partikel im Wirbelbett zu weit nach oben an die Decke des Apparats geschleudert wurden. Als der Feststoffgehalt von 45 auf 55 Gew.% angehoben wurde, oder als der Strom der Sprühflüssigkeit von 58 auf 230 g/min angehoben wurde, brach die Wirbelschicht ebenfalls zusammen.

**Tabelle 1: Prozessbedingungen**

| Nr. | Zuluft Temp. [°C] | Bett Temp. [°C] | Zuluft Volumenstrom [m³/h] | Düsengasdruck [bar] | Sprühfl. FG^{b)} [%] | Sprühfl. Strom [g/min] |
|---|---|---|---|---|---|---|
| | | | | | | |
| V^{a)} | 150 | 75 | 112 | 2 | 45 | 58 |
| 1 | 150 | 75 | 112 | 2 | 44 | 70 |
| 2 | 170 | 75 | 112 | 2 | 45 | 99 |
| 3 | 170 | 60 | 160 | 6 | 55 | 235 |
| 4 | 170 | 60 | 160 | 6 | 55 | 230 |

| | | | | | | |
|---|---|---|---|---|---|---|
| a) Vergleichsversuch, nicht erfindungsgemäß, mittels Wirbelschicht. b) Feststoffgehalt der Sprühflüssigkeit. | | | | | | |

**Tabelle 2: Analytik der Granulate**

| Nr. | Schüttgewicht lose [g/l] | Schüttgewicht gestampft [g/l] | D50 [µm] | Dispergierfähigkeit |
|---|---|---|---|---|
| V | 676 | 743 | 547 | 100 % |
| 2 | - | - | 495 | 99% |
| 3 | - | - | 618 | 100 % |
| 4 | 771 | 847 | 482 | 100 % |
| 5 | 710 | 798 | 477 | 100 % |

Rasterelektronenmikroskopische (REM) Aufnahmen:
In Figur 1 sind REM Aufnahmen eines Granulats vom Vergleichsversuch V (Figur 1 A) und vom Versuch 3 (Figur 1 B) dargestellt. Während das Wirbelschichtgranulat aus dem Vergleichsversuch V sehr unregelmäßig geformt war mit großen Furchen, war das Strahlschichtgranulat aus Versuch 3 kugelähnlich geformt mit glatter Oberfläche.

### Beispiel 2

Die Sprühflüssigkeit mit 45 Gew.% Feststoffgehalt wurde hergestellt aus 12,0 Gew.% Boscalid, 3,0 Gew.% Pyraclostrobin, 4,5 Gew.% Ammoniumsulfat, 3,0 Gew.% anorganisches Trägermaterial, 0,4 Gew.% Silikonhaltiger Entschäumer, und 15 Gew.% Dispergiermittel (Mischung von mehreren Sulfonaten) in VE-Wasser durch Rühren eine Suspension hergestellt wurde (Viskosität 44 mPas bei 20 °C). Sprühflüssigkeiten mit einem geringeren Feststoffgehalt wurden entsprechend verdünnt. Pyraclostrobin ist ein Fungizid mit Schmelzpunkt von 64 °C und einer Wasserlöslichkeit von 2 mg/l. Die Prozessbedingungen sind in Tabelle 3 und die Produktanalytik in Tabelle 4 aufgelistet.

Vergleichsversuche:
Zum Vergleich wurde die Sprühflüssigkeit in der Wirbelschicht granuliert ("V", Tabelle 3). Ausgehend von V wurden einzelne Parameter des Vergleichsversuchs verändert. Die Erhöhung der Zulufttemeratur von 100 auf 120 °C führte zum Zusammenbruch des Wirbelbetts durch verklebte Partikel. Als der Feststoffgehalt von 42 auf 45 Gew.% angehoben wurde, oder als der Strom der Sprühflüssigkeit von 58 auf 121 g/min angehoben wurde, brach die Wirbelschicht ebenfalls zusammen.

**Tabelle 3: Prozessbedingungen**

| Nr. | Zuluft Temp. [°C] | Bett Temp. [°C] | Zuluft Volumenstrom [m³/h] | Düsengasdruck [bar] | Sprühfl. FG^{b)} [%] | Sprühfl. Strom [g/min] |
|---|---|---|---|---|---|---|
| V^{a)} | 100 | 49 | 144 | 2,5-4 | 42 | 85 |
| 1 | 100 | 49 | 144 | 3,5-4 | 42 | 80 |
| 2^{c)} | 130 | 47 | 145 | 4,5-7 | 45 | 133 |
| 3 | 120 | 47 | 145 | 4-6,8 | 45 | 121 |

| | | | | | | |
|---|---|---|---|---|---|---|
| a) Vergleichsversuch, nicht erfindungsgemäß, mittels Wirbelschicht. b) Feststoffgehalt der Sprühflüssigkeit. c) mit Kühlung der Seitenwände der Strahlschichtapparatur auf 20 °C. | | | | | | |

**Tabelle 4: Analytik der Granulate**

| Nr. | Schüttgewicht lose [g/l] | Schüttgewicht gestampft [g/l] | D50 [µm] | Dispergierfähigkeit |
|---|---|---|---|---|
| V | 617 | 701 | 369 | 100 % |
| 1 | - | - | 398 | - |
| 2 | 857 g/l | 942 g/l | 471 | 100 % |
| 3 | 856 g/l | 941 g/l | 491 | 98 % |

Rasterelektronenmikroskopische (REM) Aufnahmen:

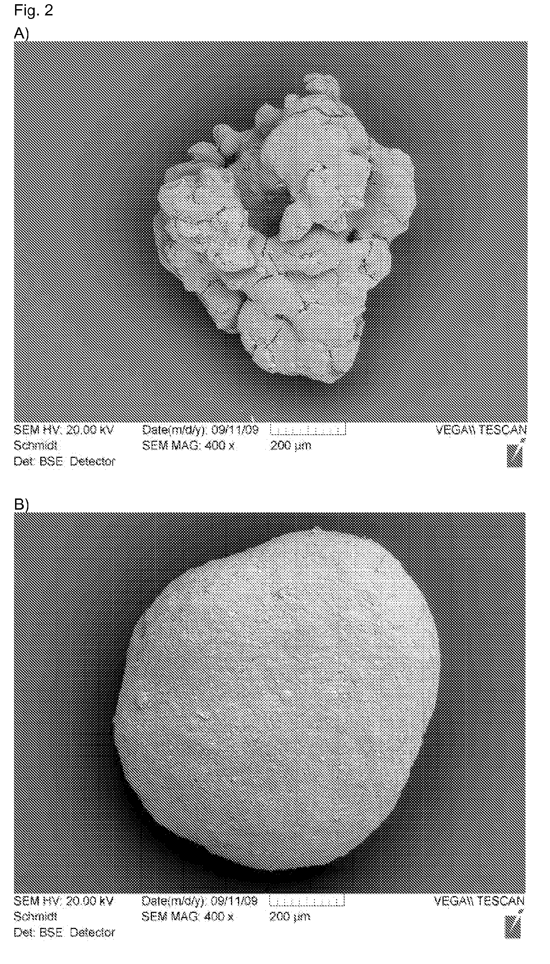

In Figur 2 sind REM Aufnahmen eines Granulats vom Vergleichsversuch V (Figur 2 A) und vom Versuch 3 (Figur 2 B) dargestellt. Während das Wirbelschichtgranulat aus dem Vergleichsversuch V sehr unregelmäßig geformt war mit großen Furchen, war das Strahlschichtgranulat aus Versuch 3 kugelähnlich geformt mit glatter Oberfläche.

## Patentansprüche

1. Verfahren zur Herstellung von Granulaten enthaltend ein Pestizid, umfassend das Aufsprühen einer Pestizid-haltigen Sprühflüssigkeit im Bereich einer kreisähnlichen Gas-Material-Strömung eines Strahlschichtapparates auf die Partikeloberfläche des Materials, und die Trocknung und Granulierung in der Gasströmung, wobei das Material Pestizid-haltige Partikel sind, und die Sprühflüssigkeit einen Feststoffgehalt von mindestens 30 Gew.% und bis zu 70 Gew.% hat.

2. Verfahren nach Anspruch 1, wobei die Temperatur der Gas-Material-Strömung bei höchstens 1 °C unterhalb des Schmelzpunktes des Pestizids liegt.

3. Verfahren nach Anspruch 1 oder 2, wobei die Sprühflüssigkeit ein Dispergiermittel enthält.

4. Verfahren nach einem der Ansprüche 1 bis 3, wobei das Dispergiermittel ein anionisches Tensid ist.

5. Verfahren nach einem der Ansprüche 1 bis 4, wobei das Granulat 10 bis 70 Gew.% Dispergiermittel enthält.

6. Verfahren nach einem der Ansprüche 1 bis 5, wobei das Granulat 20 bis 99 Gew.% Pestizid enthält.

7. Verfahren nach einem der Ansprüche 1 bis 6, wobei das Granulat mindestens 30 Gew.% Pestizid enthält.

8. Verfahren nach einem der Ansprüche 1 bis 7, wobei das Pestizid Alpha-Cypermethrin, Ametoctradin, Bentazon, Benthiavalicarb-isopropyl, Boscalid, Calciumhydrogenphosphonate, Chloridazon, Chlorothalonil, Cinidon-ethyl, Cyclosulfamuron, Cymoxanil, Dicamba, Diflufenzopyr, Dimethomorph, Dimoxystrobin, Dithianon, Diuron, Fipronil, Fluquinconazole, Folpet, Fosetyl-Al, Imazamox, Imazapic, Imazapyr, Imazethapyr, Iprodione, Isoproturon, Isoxadifen-ethyl, Kresoxim-methyl, Mancozeb, Mecoprop-P, Mepiquat-Chlorid, Metiram, Myclobutanil, Nicosulfuron, Picolinafen, Profoxydim, Prohexadione-Calcium, Propoxycarbazon-Natrium, Pyraclostrobin, Quinclorac, Saflufenacil, Sulfosulfuron, Schwefel, Tebufenpyrad, Thiram, Tritosulfuron oder Vinclozolin ist.

9. Verfahren nach einem der Ansprüche 1 bis 8, wobei optional ein oder mehrere Additive in fester Form in den Prozess eingeschleust werden, die in die Granulate eingebettet werden.

## Claims

1. A method for producing granules comprising a pesticide, comprising the spraying-on of a pesticide-containing spray liquid in the region of a near-circular gas/material stream of a spouted-bed apparatus onto the particle surface of the material, and the drying and granulation in the gas stream, where the material comprises pesticide-containing particles, and the spray liquid has a solids content of at least 30% by weight and up to 70% by weight.

2. The method according to claim 1, where the temperature of the gas/material stream is at most 1°C below the melting point of the pesticide.

3. The method according to claim 1 or 2, where the spray liquid comprises a dispersant.

4. The method according to any one of claims 1 to 3, where the dispersant is an anionic surfactant.

5. The method according to any one of claims 1 to 4, where the granules comprise 10 to 70% by weight of dispersant.

6. The method according to any one of claims 1 to 5, where the granules comprise 20 to 99% by weight of pesticide.

7. The method according to any one of claims 1 to 6, where the granules comprise at least 30% by weight of pesticide.

8. The method according to any one of claims 1 to 7, where the pesticide is alpha-cypermethrin, ametoctradin, bentazon, benthiavalicarb-isopropyl, boscalid, calcium hydrogenphosphonate, chloridazon, chlorothalonil, cinidon-ethyl, cyclosulfamuron, cymoxanil, dicamba, diflufenzopyr, dimethomorph, dimoxystrobin, dithianon, diuron, fipronil, fluquinconazole, folpet, fosetyl-Al, imazamox, imazapic, imazapyr, imazethapyr, iprodione, isoproturon, isoxadifen-ethyl, kresoxim-methyl, mancozeb, mecoprop-P, mepiquat-chloride, metiram, myclobutanil, nicosulfuron, picolinafen, profoxydim, prohexadione-calcium, propoxycarbazone-sodium, pyraclostrobin, quinclorac, saflufenacil, sulfosulfuron, sulfur, tebufenpyrad, thiram, tritosulfuron or vinclozolin.

9. The method according to any one of claims 1 to 8, where optionally one or more additives in solid form are included in the process, which additives are embedded in the granules.

## Revendications

1. Procédé de fabrication de granulats contenant un pesticide, comprenant la pulvérisation d'un liquide de pulvérisation contenant un pesticide dans la zone d'un écoulement gaz-matériau quasi-circulaire d'un appareil à lit fluidisé sur la surface des particules du matériau, et le séchage et la granulation dans le courant gazeux, le matériau étant des particules contenant un pesticide et le liquide de pulvérisation ayant une teneur en solides d'au moins 30 % en poids et de jusqu'à 70 % en poids.

2. Procédé selon la revendication 1, dans lequel la température du courant gaz-matériau est au plus 1 °C en dessous du point de fusion du pesticide.

3. Procédé selon la revendication 1 ou 2, dans lequel le liquide de pulvérisation contient un dispersant.

4. Procédé selon l'une quelconque des revendications 1 à 3, dans lequel le dispersant est un tensioactif anionique.

5. Procédé selon l'une quelconque des revendications 1 à 4, dans lequel le granulat contient 10 à 70 % en poids de dispersant.

6. Procédé selon l'une quelconque des revendications 1 à 5, dans lequel le granulat contient 20 à 99 % en poids de pesticide.

7. Procédé selon l'une quelconque des revendications 1 à 6, dans lequel le granulat contient au moins 30 % en poids de pesticide.

8. Procédé selon l'une quelconque des revendications 1 à 7, dans lequel le pesticide est l'alpha-cyperméthrine, l'amétoctradine, la bentazone, le benthiavalicarb-isopropyle, le boscalide, les hydrogénophosphonates de calcium, le chloridazone, le chlorothalonil, le cinidon-éthyle, le cyclosulfamuron, le cymoxanil, le dicamba, le diflufenzopyr, le diméthomorph, la dimoxystrobine, le dithianon, le diuron, le fipronil, le fluquinconazole, le folpet, le fosétyl-Al, l'imazamox, l'imazapic, l'imazapyr, l'imazéthapyr, l'iprodione, l'isoproturon, l'isoxadifen-éthyle, le krésoxim-méthyle, le mancozeb, le mécoprop-P, le chlorure de mépiquat, le métiram, le myclobutanil, le nicosulfuron, le picolinafen, le profoxydim, la prohexadione-calcium, la propoxycarbazone-sodium, la pyraclostrobine, le quinclorac, le saflufénacil, le sulfosulfuron, le soufre, le tébufenpyrad, le thiram, le tritosulfuron ou la vinclozoline.

9. Procédé selon l'une quelconque des revendications 1 à 8, dans lequel un ou plusieurs additifs sont éventuellement introduits dans le procédé sous forme solide, et sont incorporés dans les granulats.
